# EUROPÄISCHE PATENTSCHRIFT

(11) **EP 2 882 634 B1**
(45) Veröffentlichungstag und Bekanntmachung des Hinweises auf die Patenterteilung: **27.12.2017**
(21) Anmeldenummer: 13725895.0
(22) Anmeldetag: 17.04.2013
(51) Int. Cl.: B62D 65/18, B65G 41/00

(54) **ÜBERFLURFÖRDEREINRICHTUNG MIT SÄULENPORTALEN**
OVERHEAD CONVEYOR STRUCTURE ON TOP OF A GANTRY
STRUCTURE DE CONVOYEUR AERIEN AU-DESSUS D'UN PORTIQUE

(30) Priorität: 09.08.2012 DE 102012214127
(43) Veröffentlichungstag der Anmeldung: 17.06.2015
(73) Patentinhaber: Hösker, Torsten, 74706 Osterburken (DE)
(72) Erfinder: Hösker, Torsten, 74706 Osterburken (DE)
(74) Vertreter: advotec.
(86) Internationale Anmeldenummer: PCT/DE2013/000199
(87) Internationale Veröffentlichungsnummer: WO 2014/023273

(56) Entgegenhaltungen:
- EP-A1- 2 340 982
- EP-B1- 0 968 073
- DE-T2- 60 202 985
- JP-A- 2003 341 818
- JP-A- 2008 222 137

## Beschreibung

Die Erfindung betrifft eine Überflurfördereinrichtung zur Integration in einer Montageanlage, die zum Transport von Fahrzeugkomponenten geeignet ist, nach dem Oberbegriff des Anspruchs 1.

Die EP 2 340 982 A1 offenbart eine Fabrikanlage, bei der auf einer unteren Ebene Produktionseinrichtungen angeordnet sind und auf einer oberen Ebene eine Fördereinrichtung angeordnet ist. Zur Lagerung der Fördereinrichtung wird ein Säulenportal eingesetzt, welches von zwei Stützsäulen und einer Querbrücke gebildet wird. Auf der Querbrücke ist mittig die Transportvorrichtung und seitlich hierzu Wartungsgänge angeordnet.

Die JP 2003-341818 A offenbart eine Transportvorrichtung für Fahrzeugkomponenten, wobei die Fahrzeugkomponenten hängend in einer unteren Ebene an einem Traggerüst transportiert werden. Hierbei ist vorgesehen, dass die Transportvorrichtung aus einzelnen modularen Sektionen aufgebaut wird.

In Montageanlagen zur Herstellung von Fahrzeugen werden verschiedene Arten von Fördereinrichtungen sowie Überflurfördereinrichtungen eingesetzt. Aufgrund der zum jeweils herzustellenden Fahrzeug individuell abgestimmten Montageanlagen und hieran ausgerichteten Fördereinrichtungen, werden entsprechend die betrachteten Überflurfördereinrichtungen individuell ausgeführt und hergestellt. Eine Überflurfördereinrichtung der vorliegenden Art betrifft hierbei diejenigen Fördereinrichtungen, unterhalb deren zumindest soviel freier Bewegungsraum verbleibt, dass eine Person ungehindert darunter laufen kann. In aller Regel wird hierbei eine freie Durchgangshöhe von mindestens 2,5 m oder mehr angestrebt, so dass ebenso Gabelstapler oder andere Transportfahrzeuge die Überflurfördereinrichtung unterqueren können. Ebenso werden entsprechende Überflurfördereinrichtungen eingesetzt, um einen zusätzlichen Montageraum zu gewinnen, wobei unter der Überflurfördereinrichtung auf dem Boden stehend eine weitere Fördereinrichtung oder eine sonstige Montageeinlage, beispielsweise ein Montageroboter, angeordnet werden kann. Zur Integration entsprechender Überflurfördereinrichtungen in eine gesamte Montageanlage in einem Gebäude ist es im Stand der Technik üblich, ein Traggerüst zur Aufstellung der eigentlichen Fördereinrichtung vor Ort im Gebäude aus Stahlträgern oder dergleichen zusammenzubauen, wobei ein aller Regel die Streben und Pfeiler baustellenseitig miteinander verschweißt werden. Dies gestattet die Anpassung an die vorliegenden Verhältnisse sowohl hinsichtlich der Montageanlagen als auch hinsichtlich der Gebäudemöglichkeiten und insbesondere können bereits vorhandene Montageanlagen oder Gebäudeeinbauten Berücksichtigung finden.

Die gattungsgemäße Überflurfördereinrichtung ist zunächst einmal bestimmt zur Integration in einer Montageanlage zum Transport von Fahrzeugkomponenten. Um welche Art von Fahrzeugkomponenten es sich hierbei handelt, ist ohne Belang. Wesentlich ist, dass die Überflurfördereinrichtung in einem gesamten Montagekonzept eingebunden wird und hierbei die Herstellung eines Fahrzeugs durch den Transport der zugewiesenen Fahrzeugteile ermöglicht. Hierzu weist die Überflurfördereinrichtung ein Traggerüst und zumindest eine Fördereinrichtung auf. Gattungsgemäß weist das Traggerüst eine Länge von mehr als 5 m und eine Breite von mehr als 2 m auf. In welcher Höhe das Traggerüst der Überflurfördereinrichtung über dem Boden des bestimmungsgemäßen Gebäudes angebracht wird, ist für die vorliegende Erfindung ohne Belang, jedoch wird die freie Durchgangshöhe unterhalb des Traggerüstes zumindest 2 m betragen, um eine taugliche Nutzhöhe unterhalb des Traggerüsts zu gewährleisten. Das Traggerüst seinerseits wird hierbei von längsgerichteten und/oder quergerichteten oder diagonal miteinander verbundenen Tragbalkenelemente realisiert. Die Tragbalkenelemente sind hierbei in aller Regel stabartig ausgeführt und können sowohl Rohrprofile, T-Träger oder sonstige Formate aufweisen und hierbei sowohl als Zug-, Druck- oder Biegeträger ausgelegt sein.

Die zugehörige Fördereinrichtung ist hierbei auf dem Traggerüst montiert und ermöglicht einen Transport entsprechender Fahrzeugkomponenten, wobei der Transport in aller Regel entlang der Längsrichtung der Überflurfördereinrichtung vonstatten geht.

Weiterhin umfasst das Traggerüst Lagerungsmittel, auf denen die Überflurfördereinrichtung in der Montageanlage gelagert wird. Ob es sich hierbei um Festlager, Loslager oder sonstige Lagerungsarten handelt, ist zunächst ohne Belang. Zumindest stützt sich das Traggerüst im Wesentlichen in Richtung der Schwerkraft an den Lagerungsmitteln auf und von der Montageanlage bzw. dem Gebäude bereitgestellten Gegenlagern ab.

Die üblicherweise anzufindende Praxis, vor Ort das Traggerüst anhand der vorgefundenen Gegebenheiten zusammenzusetzen, führt zu einer in aller Regel unterbleibenden statischen Berechnung und vorherigen Detail-Konstruktion des Traggerüsts der Überflurfördereinrichtung. Aufgrund der nur unzureichend durchgeführten Berechnungen des Traggerüsts wird zur Sicherheit dieses in aller Regel deutlich überdimensioniert ausgeführt, wobei jedoch auch dabei keine Gewähr geleistet ist, dass eine hinreichende Sicherheit vorhanden ist.

Von besonderem Nachteil bei der aus dem Stand der Technik bekannten Ausführung einer Überflurfördereinrichtung ist jedoch der für den Aufbau der entsprechenden Bestandteile in der Montageanlage erforderliche erhebliche Zeitaufwand. Während dieser Aufbauarbeiten steht zwangsläufig im Bereich der herzustellenden Überflurfördereinrichtung die Montageanlage nicht anderweitig zur Verfügung. Insbesondere bei einem Umbau der Montageanlage von einer Ausführung beispielsweise zur Herstellung eines bestimmten Fahrzeugmodells zu einer neuen Ausführung der Montageanlage zur Herstellung eines geänderten Fahrzeugmodells führt dies zu einem unerwünschten Produktionsausfall für die Dauer des Aufbaus der Überflurfördereinrichtung.

Aufgabe der vorliegenden Erfindung ist es daher, den Aufbau einer Überflurfördereinrichtung in einer Montageanlage zu Vermeidung der beschriebenen Nachteile zu verbessern.

Diese Aufgabe wird durch eine Überflurfördereinrichtung nach der Lehre des Anspruchs 1 gelöst.

Vorteilhafte Ausführungsformen der Erfindung sind Gegenstand der Unteransprüche.

Grundgedanke der Überflurfördereinrichtung ist es, dass die Lagerungsmittel zur Abstützung des Traggerüsts in der gewünschten Höhe in der Art von Säulenportalen ausgebildet sind. Diese Säulenportale sind dabei dadurch charakterisiert, dass zumindest zwei Stützsäulen vorhanden sind, deren untere Enden auf dem Boden der Montageanlage angebracht werden. Weiter umfasst das Säulenportal eine Querbrücke, die zwischen den zwei Stützsäulen angebracht wird. Auf diese Querbrücke kann das Traggerüst von oben aufgelegt werden. Die Verwendung von Säulenportalen zur Abstützung des Traggerüsts ermöglicht es, die Überflurfördereinrichtung stufenweise aus vorgefertigten Komponenten vorzunehmen. Bei der Montage der Überflurfördereinrichtung können zunächst die Säulenportale einzeln positioniert und am Hallenboden fixiert werden. Anschließend kann dann das Traggerüst in vorgefertigter Form auf die Querbrücken der Säulenportale aufgelegt werden, wozu beispielsweise ein geeignetes Hebefahrzeug, beispielsweise ein ausreichend großer Gabelstapler, eingesetzt werden kann. Im Ergebnis kann somit die Montagezeit zum Aufbau der Überflurfördereinrichtung signifikant verkürzt werden. Außerdem können die Säulenportale hinsichtlich ihrer mechanischen Stabilität sehr gut berechnet werden, so dass die üblichen Überdimensionierungen nicht erforderlich sind. Das auf die Querbrücken aufgelegte Traggerüst kann außerdem optimal ausgerichtet und justiert werden, bevor das Traggerüst an den Querbrücken befestigt wird.

Erfindungsgemäß ist es vorgesehen, dass das Traggerüst in der Art eines räumlichen Fachwerks ausgeführt ist. Das heißt, dass das selbsttragende Traggerüst aus längsgerichteten, quergerichteten, diagonalen und aufrecht stehenden miteinander verbundenen Tragbalkenelementen gebildet wird. Durch diese Fachwerkkonstruktion kann eine hohe Steifigkeit des Traggerüsts bei geringem Gewicht gewährleistet werden, welches insbesondere den Transport der vormontierten Überflurfördereinrichtung begünstigt.

Gemäß einer bevorzugten Ausführungsform ist es vorgesehen, dass zwischen den Säulenportalen und dem Traggerüst eine Trennebene verläuft, wobei die Trennebene von Befestigungsmitteln, mit denen das Traggerüst auf dem Säulenportal fixierbar ist, übergriffen wird. Als Befestigungsmittel im Sinne dieses Anspruchs sind beispielsweise Befestigungsschrauben, Befestigungsnieten oder auch Schweißnähte anzusehen. Durch die durchgängige Trennebene zwischen den Säulenportalen einerseits und dem Traggerüst andererseits wird es ermöglicht, dass das Traggerüst nach dem Auflegen auf die Querbrücken der Säulenportale optimal in seiner Lage justiert werden kann.

Um eine möglichst hohe Stabilität der Überflurfördereinrichtung zu gewährleisten, ist es besonders vorteilhaft, wenn die Stützsäulen und/oder die Querbrücken des Säulenportals aus Rohrmaterial mit geschlossenem Rohrquerschnitt hergestellt sind. Insbesondere Rohre mit rechteckförmigem oder quadratischem Querschnitt sind hervorragend zur Herstellung des Säulenportals geeignet.

In welcher Weise die Querbrücke mit den Stützsäulen verbunden wird, um das Säulenportal der erfindungsgemäßen Überflurfördereinrichtung zu bilden, ist grundsätzlich beliebig. Im Hinblick auf eine möglichst hohe Stabilität ist es besonders vorteilhaft, wenn die oberen Enden der Stützsäulen und/oder die seitlichen Enden der Querbrücken auf Gehrung geschnitten sind und die Endquerschnitte der beiden Stützsäulen flächenbündig auf den Endquerschnitten der Querbrücke zur Anlage kommen.

Zur Fixierung der Endquerschnitte der Querbrücke einerseits und der Stützsäulen andererseits sind beliebige Befestigungsmittel denkbar. Eine besonders hohe Stabilität ergibt sich, wenn die Endquerschnitte miteinander verschweißt sind.

Das zur Bildung der erfindungsgemäßen Überflurfördereinrichtung erforderliche Säulenportal weist aufgrund seiner portalförmigen Bauform einen großen Querschnitt auf, so dass beim Transport des Säulenportals ein entsprechend großer Transportraum notwendig ist. Um den notwendigen Transportraum zum Transport des Säulenportals zu reduzieren, ist es deshalb besonders vorteilhaft, wenn die Stützsäulen zweiteilig ausgebildet sind, wobei die beiden Teile der Stützsäulen in einer Verbindungsstelle miteinander verbunden werden können. Die Trennstelle der Stützsäulen sollte dabei möglichst in der Nähe der Anschlussstelle zur Querbrücke des Säulenportals liegen. Im Ergebnis kann somit das Säulenportal in drei Teile zerlegt werden, die jeweils eine im Wesentlichen axiale Längenausdehnung aufweisen und entsprechend auf geringem Transportraum transportiert werden können. Am eigentlichen Einsatzort kann das Säulenportal durch Montage der unteren Teile der Stützsäulen an die oberen Teile der Stützsäulen, die mit der Querbrücke verbunden sind, zusammengesetzt werden. Um das Traggerüst nach dem Aufrichten der Säulenportale an der Querbrücke zu befestigen, ist es besonders vorteilhaft, wenn an der Querbrücke Befestigungslaschen vorgesehen sind. Durch die Art der Anordnung der Befestigungslaschen kann außerdem eine bestimmte Ausrichtung des Traggerüsts relativ zu den Säulenportalen vorgegeben werden.

Erfindungsgemäß wird die Integration der Überflurfördereinrichtung in einer Montageanlage mit geringen Stillstandzeiten in Folge der Aufstellung der Überflurfördereinrichtung durch eine selbsttragende Ausführung des Traggerüsts und eine Vormontage des Traggerüsts erzielt. Hierbei kann das Traggerüst vormontiert vom Herstellungsort zum Verwendungsort transportiert werden.

Besonders vorteilhaft ist es jedoch, wenn sowohl das Traggerüst als auch ebenso die Fördereinrichtung auf dem Traggerüst vor einer Aufstellung am Verwendungsort vormontiert werden. Hierbei kann das Traggerüst nebst der darauf angeordneten Fördereinrichtung vormontiert vom Herstellungsort zum Verwendungsort transportiert werden.

Es ist offensichtlich, dass es zur Einbindung der Fördereinrichtung in der Montageanlage einer Verbindung von diversen Schnittstellenverbindungen, sei es Stromverbindungen, Datenverbindungen oder Prozessleitungen, wie beispielsweise Druckluft oder Hydrauliköl, zwischen der vormontierten Überflurfördereinrichtung und der sonstigen Montageanlage bedarf.

Zumindest ist es erfindungsgemäß erforderlich, dass das eigentliche Traggerüst bereits vormontiert ist und vorteilhaft weiterhin die Fördereinrichtung noch vor einer Aufstellung am Verwendungsort auf dem Traggerüst montiert ist. Somit bedarf es zur Realisierung der Überflurfördereinrichtung in der Montageanlage lediglich der Freischaffung entsprechenden Platzes und Schaffung entsprechender Gegenlager zur Aufnahme der Lagerungsmittel, wobei sodann die vormontierte Überflurfördereinrichtung lediglich mittels Kran aufgestellt werden muss. Hierdurch wird die Montagezeit zur Aufstellung der Überflurfördereinrichtung gegenüber allem Bekannten drastisch gesenkt. Wenngleich dies mit geringem Nachteil hinsichtlich der flexiblen Anpassung an die örtlichen Gegebenheiten verbunden ist, so sind dennoch die Vorteile hinsichtlich des geringen Stillstands der Montageanlage deutlich von Vorteil.

Weiterhin ist es von besonderem Vorteil, wenn das Traggerüst von einer Schweißkonstruktion gebildet wird. Das heißt, dass das selbsttragende Traggerüst im Wesentlichen aus Stahlstreben und gegebenenfalls sonstigen Stahlelementen, wie z.B. Knotenblechen, gebildet wird, welche miteinander verschweißt werden. Sofern die Fördereinrichtung von geringem Gewicht ist oder eine Gewichtseinsparung insgesamt von hoher Wichtigkeit ist, ist es ebenso denkbar, das Traggerüst beispielsweise aus Aluminium herzustellen und ebenso die einzelnen Elemente, wie Streben und Knotenelemente, miteinander zu verschweißen.

Eine Schweißkonstruktion hat gegenüber einer zusammen geschraubten Ausführung unter anderem den Vorteil, dass nicht die Gefahr besteht, dass zu einem späteren Zeitpunkt vom Anlagenbetreiber eine unzulässige Änderung am Traggerüst vorgenommen wird. Bei Ausführungen aus dem Stand der Technik ist dies aufgrund der in der Regel vorhandenen Überdimensionierung ggf. unkritisch. Bei einer spezifischen Auslegung des Traggerüsts auf die zu tragende Fördereinrichtung kann ein Eingriff in das Traggerüst zu weitreichenden Schäden führen, dem mit einer Schweißkonstruktion entgegen gewirkt wird.

Weiterhin ist es von besonderem Vorteil, wenn entlang zumindest einer Längsseite der Fördereinrichtung ein Wartungsgang vorhanden ist. Dieser ist hier dergestalt auszuführen, dass er gefahrfrei begehbar ist. Hierzu wird der Wartungsgang an einer Längsseite des Traggerüsts angeordnet und mit diesem verbunden. Hierbei kann die Verbindung des Wartungsgangs mit dem Traggerüst sowohl in der Vormontage der Überflurfördereinrichtung vorgenommen werden, als es auch ebenso denkbar ist, den Wartungsgang als ein in sich vormontiertes Anbauteil vor Ort am Traggerüst zu befestigen.

Besonders vorteilhaft ist es, wenn Wartungsgänge beidseitig der Fördereinrichtung vorhanden sind. Zur Erhöhung der Steifigkeit der gesamten Anordnung und insbesondere der Stabilität der Wartungsgänge sind hierbei die beidseitig längs der Fördereinrichtung vorhandenen Wartungsgänge mittels Verbindungsträger miteinander verbunden.

Im Falle von beidseitig vorhandenen Wartungsgängen mit zwischenliegender Fördereinrichtung, wobei die Wartungsgänge endseitig mittels Verbindungsträgern verbunden sind, ist es weiterhin besonders vorteilhaft, wenn zumindest eine Vertikaltransportöffnung vorgesehen wird. Diese ist zwischen Traggerüst, Wartungsgängen und Verbindungsträgern anzuordnen. Durch diese Vertikaltransportöffnung können sodann die Fahrzeugkomponenten von der Fördereinrichtung, welche sich oberhalb des Traggerüsts befindet, in weitgehend vertikaler Richtung durch die Überflurfördereinrichtung von oberhalb des Traggerüstes nach unterhalb des Traggerüsts transportiert werden. Somit kann eine Übergabe von oberhalb des Traggerüsts transportierten Fahrzeugkomponenten an eine andere Fördereinrichtung oder eine Montageeinrichtung unterhalb der Überflurfördereinrichtung vonstatten gehen.

Hierbei ist es entsprechend besonders vorteilhaft, wenn an beiden Enden der Fördereinrichtung entsprechende Vertikaltransportöffnungen vorgesehen werden, so dass an einem Ende der Überflurfördereinrichtung eine Übernahme von Fahrzeugkomponenten von unterhalb der Überflurfördereinrichtung erfolgen kann. Sodann kann die Fahrzeugkomponente entlang der Überflurfördereinrichtung von der darauf befindlichen Fördereinrichtung transportiert werden und nachfolgend am jeweils anderen Ende der Überflurfördereinrichtung durch die andere Vertikaltransportöffnung wiederum herab von oberhalb des Traggerüsts nach unterhalb des Traggerüsts übergeben werden.

Bei entsprechend vorhandenen beidseitigen Wartungsgängen mit der zwischenliegenden Vertikaltransportöffnung am Ende des Traggerüsts ist es weiterhin besonders vorteilhaft, wenn ein zwischen Offenstellung und Geschlossenstellung verstellbares Schließmittel vorhanden ist. Hierbei ist das Schließmittel begehbar dergestalt auszuführen, dass es in der Offenstellung die erforderliche Vertikaltransportöffnung zur Nutzung der Überflurfördereinrichtung frei gibt und bei einer Geschlossenstellung einen vorteilhaft stufenfreien Übergang zwischen den beiden Wartungsgängen ermöglicht. Somit kann im Wartungsfall bei in aller Regel vorliegendem Stillstand der Fördereinrichtung diese im Wesentlichen umlaufend mittels der Wartungsgänge und dem verbindenden Schließmittel begangen werden.

Aufgrund der Vormontage der Überflurfördereinrichtung und der entsprechend auf das Gewicht der Überflurfördereinrichtung und deren Gewichtsverteilung ausgelegten Steifigkeit des Traggerüsts ist es besonders vorteilhaft möglich, eine variable veränderbare Aufstellung des Traggerüsts in der Montageanlage zuzulassen. Hiermit wird insbesondere der Nachteil kompensiert, dass nicht, wie im Stand der Technik, eine Anpassung an die vor Ort gefundenen Gegebenheiten erfolgen kann, sondern vielmehr die Überflurfördereinrichtung fertig vormontiert mit definierten Positionen der Lagerungsmittel eine entsprechende Möglichkeit zur Aufstellung in der Montageanlage vorfinden muss.

Hierbei ist es besonders vorteilhaft, wenn die Anzahl N_{L} an Lagerungsmitteln größer ist, als die zur Lagerung erforderliche Anzahl N_{E}. Das heißt, dass am Traggerüst eine Anzahl N_{L} von Lagerungsmitteln, auf denen jeweils eine Aufstellung in der Montageanlage erfolgen kann, vorhanden ist, jedoch zur Aufstellung der Überflurfördereinrichtung in der Montageanlage es gerade nicht erforderlich ist, dass jedes dieser vorhandenen Lagerungsmittel genutzt wird. Vielmehr ist es hinreichend, wenn lediglich in der erforderlichen Anzahl N_{E} Gegenlager vorhanden sind. Hierbei ist es weiterhin vorgesehen, dass die Auswahl der von den vorhandenen zu nutzenden Lagerungsmittel bei Aufstellung der Überflurfördereinrichtung in der Montageanlage beliebig in erforderlicher Anzahl N_{E} erfolgen kann. Dies bedeutet naheliegend, dass die Überflurfördereinrichtung unvermindert an allen vorhandenen Lagerungsmitteln in der Montageanlage auf Gegenlagern gelagert werden kann.

Besonders vorteilhaft ist hierbei eine Ausführung, welche zumindest sechs Lagerungsmittel aufweist, wobei die erforderliche Anzahl N_{E} kleiner/gleich dem aufgerundeten 0,72-fachen der Anzahl N_{L} der vorhandenen Lagerungsmittel ist. Das heißt, dass bei sechs vorhandenen Lagerungsmitteln die Aufstellung auf zumindest fünf Gegenlagern zu erfolgen hat. Bei sieben oder acht vorhandenen Lagerungsmitteln hat die Aufstellung mit zumindest sechs der vorhandenen Lagerungsmittel zu erfolgen. Bei neun vorhandenen Lagerungsmitteln sind es entsprechend sieben zu verwendende Lagerungsmittel, usw.. Besonders vorteilhaft ist es, wenn die Steifigkeit des Traggerüsts derart gewählt wird, dass insbesondere lediglich die aufgerundet 0,6-fache Anzahl N_{L} der vorhandenen Lagerungsmittel als erforderliche Anzahl N_{E} notwendig ist.

Weiterhin ist es vorteilhaft, wenn die Überflurfördereinrichtung Stützelemente aufweist, auf denen jeweils ein Lagerungsmittel angeordnet ist. Insofern bedarf es in vorteilhafter Ausführung derjenigen Anzahl an Stützelementen entsprechend der erforderlichen Anzahl N_{E} der Lagerungsmittel, wobei in vorteilhafter Ausführung dennoch zu jedem Lagerungsmittel ein Stützelement zugeordnet wird. Hierbei können die Stützelemente freistehende Stützsäulen und/oder Wandkonsolen und/oder freihängende Zugelemente sein. Zumindest ist vorgesehen, dass die Überflurfördereinrichtung mit dem Traggerüst am Lagerungsmittel auf Gegenlagern der Stützelemente aufliegt, welche ihrerseits wiederum eine Anbindung in der Montageanlage bzw. dem Gebäude erfahren.

Hierbei ist es besonders vorteilhaft, wenn die Anzahl an Stützelementen größer ist als die zur Lagerung erforderliche Anzahl N_{E}, wobei ein Beliebiges der vorhandenen Stützelemente ohne Einschränkung der Verwendbarkeit der Überflurfördereinrichtung am Verwendungsort entfernt und/oder ersetzt werden kann. Somit kann insbesondere im Schadensfall, beispielsweise wenn ein Transportfahrzeug gegen einen Stützsäulen fährt, ein Stützsäulen demontiert werden, ohne dass dies die Tauglichkeit der Überflurfördereinrichtung sowohl hinsichtlich des Transports von Fahrzeugkomponenten mittels der Fördereinrichtung einschränkt, als auch die hinreichende Statik gewährleistet wird. Somit kann entsprechend im Schadensfall ein unkomplizierter Austausch erfolgen, ohne dass ein Montagestillstand eintreten muss.

In den nachfolgenden Figuren werden beispielhafte zwei Überflurfördereinrichtung mit einem Traggerüst gelagert auf Säulenportalen skizziert.

Es zeigen:
- Fig. 1: eine erste beispielhafte Überflurfördereinrichtung in perspektivischer Ansicht unter Weglassung der Fördereinrichtung;

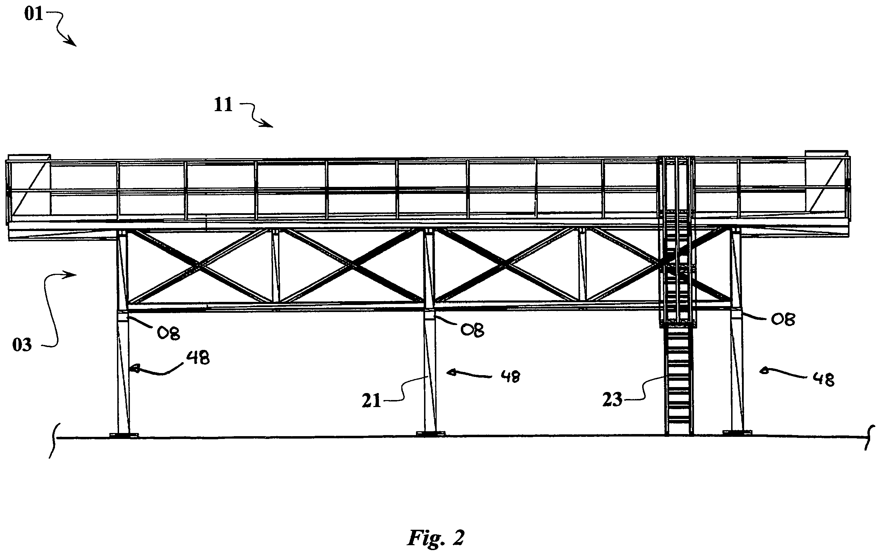

- Fig. 2: eine Seitenansicht zur Fig. 1;

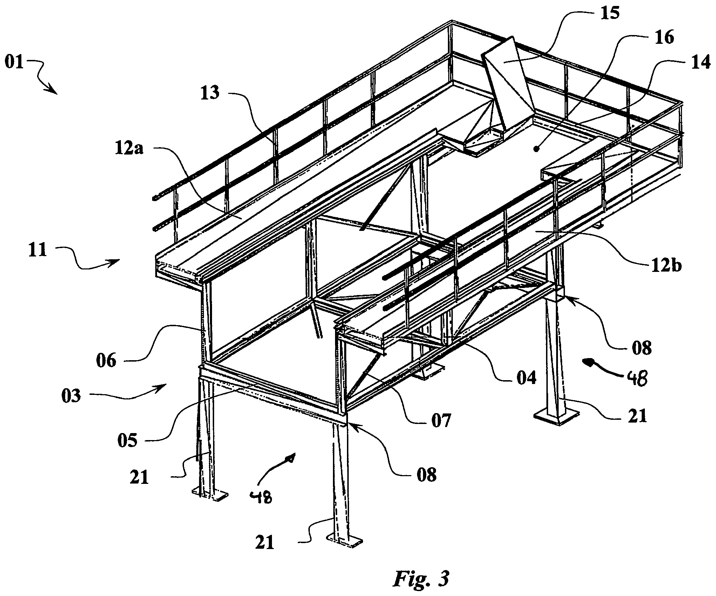

- Fig. 3: einen Halbschnitt zur Ansicht aus Fig. 1;
- Fig. 4: das Traggerüst zur Fig. 1;
- Fig. 5: den Wartungsgang zur Fig. 1.
- Fig. 6: eine zweite Überflurfördereinrichtung in schematisierter Ansicht von vorne;
- Fig. 7: das Säulenportal der Überflurfördereinrichtung gemäß Fig. 6 in Ansicht von vorne;
- Fig. 8: das Säulenportal gemäß Fig. 7 nach Montage des Traggerüsts;
- Fig. 9: das Säulenportal mit Traggerüst gemäß Fig. 8 nach Montage der Fördereinrichtung, beispielsweise eines Schubförderers.

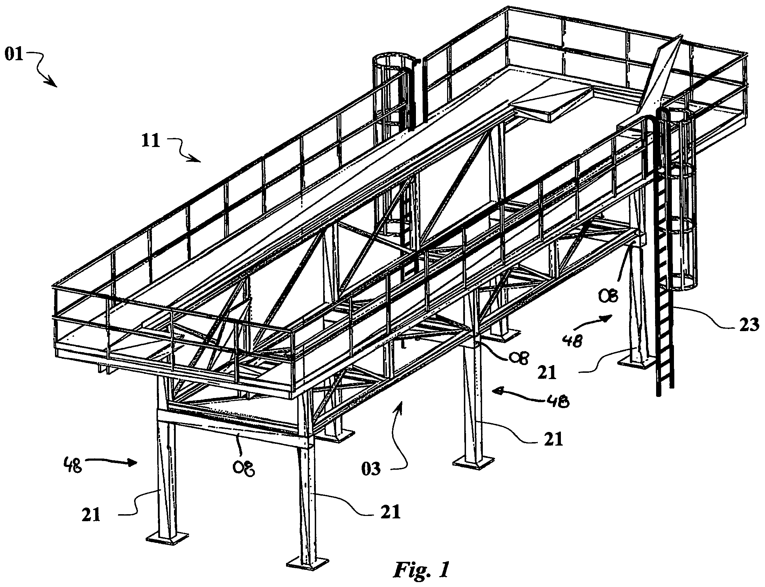

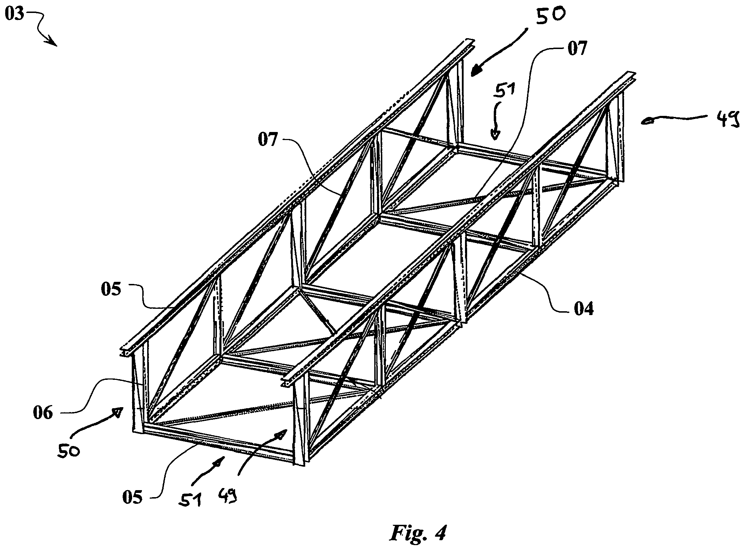

In der **Figur 1** ist eine perspektivische Darstellung einer Überflurfördereinrichtung 01 in beispielhafter Ausführungsform skizziert. Hierbei wurde jedoch auf die Darstellung der zur Überflurfördereinrichtung 01 gehörenden Fördereinrichtung verzichtet. Diese befindet sich, wie der Fachmann leicht nachvollziehen kann, mittig im Traggerüst 03 und steht hierbei je nach Ausführungsform erhaben über dem Traggerüst 03 über. Das Traggerüst 03 ist hierbei in Art eines Fachwerks ausgeführt und umfasst eine Mehrzahl von miteinander verschweißten Tragbalkenelementen 04-07. Wie hierzu aus der **Figur 4** ersichtlich ist, wird das Traggerüst 03 von längsgerichteten Tragbalkenelementen 04, quergerichteten Tragbalkenelementen 05, aufrechten Tragbalkenelementen 06 sowie diagonalen Tragbalkenelementen 07 gebildet. Das Traggerüst 03 mit seinen Tragbalkenelementen 04, 05, 06 und 07 ist hierbei dergestalt ausgeführt, dass mit aufmontierter Fördereinrichtung eine hinreichende selbsttragende Eigensteifigkeit vorhanden ist, so dass ein Transport der gesamten Überflurfördereinrichtung 01 zumindest des Traggerüsts 03 mit aufmontierter Fördereinrichtung als Ganzes möglich ist. Dazu ist das Traggerüst 03 aus zwei Seitenteilen 49 und 50 und einem Bodenteil 51 zusammengebaut. Die Seitenteilen 49 und 50 und das Bodenteil 51 weisen eine jeweils ebene Bauteilstruktur mit hoher Steifigkeit in der Bauteilebene auf. Die Seitenteilen 49 und 50 und das Bodenteil 51 sind aus den Tragbalkenelementen 04, 05, 06 und 07 zusammengesetzt. Das Traggerüst 03 ist hinsichtlich der Steifigkeit, insbesondere Biegesteifigkeit, dahingehend auszulegen, dass sowohl für den Transportfall als auch für die spätere Aufstellung die Lagerung auf den zugehörigen Säulenportalen 48 im Wesentlichen verformungsfrei möglich ist.

Entsprechend der jeweils zu bestimmenden statischen Auslegung der Überflurfördereinrichtung 01 weist das Traggerüst 03 eine Mehrzahl von Säulenportalen 48 auf. Jedes Säulenportal 48 besteht aus zwei Stützsäulen 21 und einer dazwischen angebrachten Querbrücke 08. Weiterhin ist in diesem Ausführungsbeispiel die Statik des Traggerüsts 03 derart ausgelegt und die Steifigkeit derart gewählt, dass die Stabilität der gesamten Anordnung auch bei Weglassen einzelner Stützsäulen gewährleistet ist. Somit ist es zum einen denkbar, im Aufstellungsfall in der Montageanlage lediglich fünf der dargestellten sechs Stützsäulen 21 einzusetzen oder es ist ebenso möglich, sechs Stützsäulen einzusetzen, wobei im Schadensfall, beispielsweise durch Kollision mit einem Fahrzeug, ein Stützsäulen ohne Einschränkung der Tauglichkeit der Überflurfördereinrichtung ersetzt werden kann.

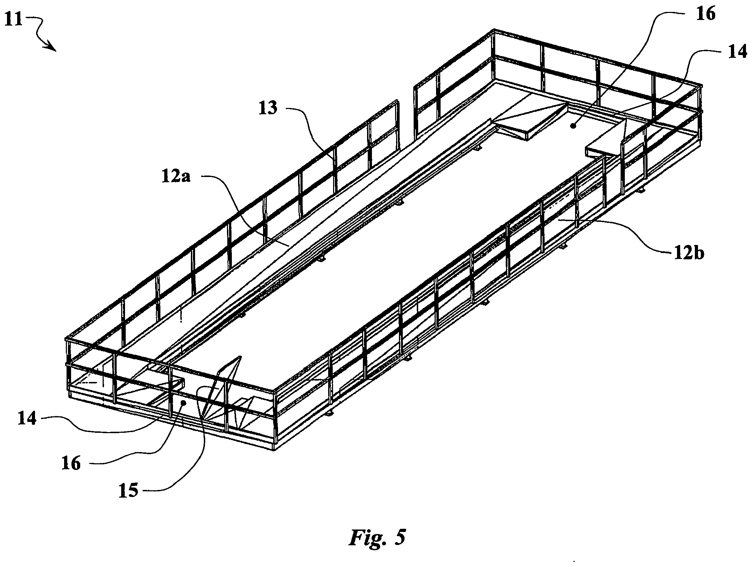

Weiterhin ist in Fig. 5 das zur Überflurfördereinrichtung 01 gehörende Wartungsgerüst 11 mit sich beidseitig der Flurfördereinrichtung erstreckenden Wartungsgängen 12a und 12b - siehe auch Fig. 5 - zu erkennen. Diese Wartungsgänge 12 sind endseitig mit Verbindungsträgern 14 verbunden, so dass eine erhöhte Stabilität der gesamten Anordnung mit dem Wartungsgerüst 11 bzw. der Wartungsgänge 12a, 12b gegeben ist. Ein umlaufendes Sicherheitsgeländer 13 gewährleistet hierbei die Sicherheit der entsprechenden Wartungspersonen beim Betreten des Wartungsgangs 12. Der Aufgang zum Wartungsgang 12 wird durch Leitern 23 in Anordnung am Wartungsgerüst 11 ermöglicht.

Weiterhin sind die beiden endseitig vorhandenen Vertikaltransportöffnungen 16 zu erkennen, durch welche die zu transportierende Fahrzeugkomponente gereicht werden kann. Um den Übergang von einem Wartungsgang 12a zum anderen Wartungsgang 12b gefahrenfrei zu ermöglichen, sind weiterhin bei den Vertikaltransportöffnungen 16 Schließmittel 15 vorhanden. Diese können von einer skizzierten Offenstellung in eine Geschlossenstellung gebracht werden, wobei sodann ein ebener Übergang von einer Seite zur anderen Seite vorhanden ist.

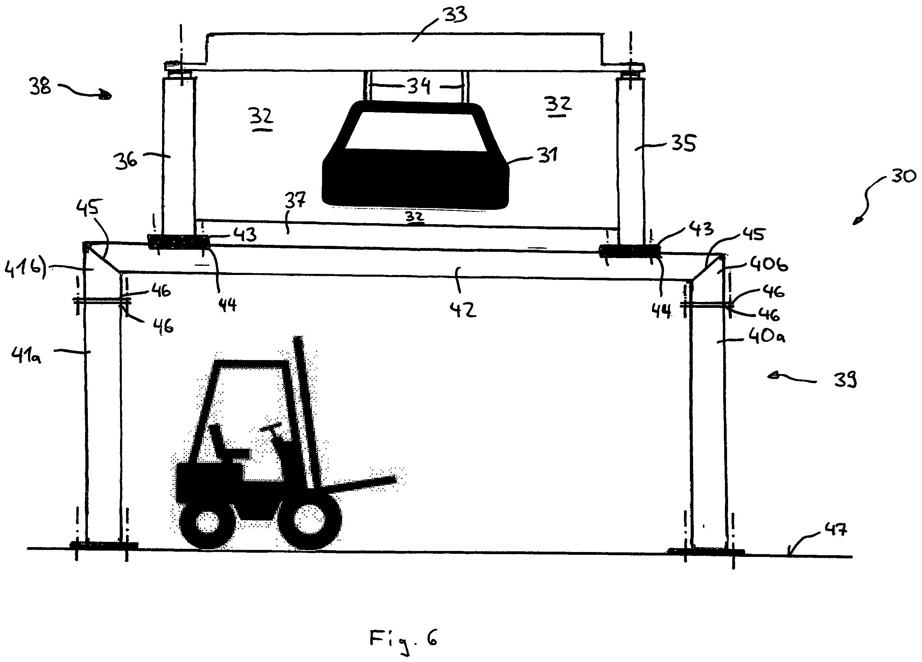

Fig. 6 zeigt eine zweite Überflurfördereinrichtung 30 in Ansicht von vorne. Die Überflurfördereinrichtung 30 ist zum Transport von Fahrzeugkomponenten 31 entlang eines Förderkorridors 32 vorgesehen. Die eigentliche Förderbewegung zum Transport der Fahrzeugkomponenten 31 wird dabei durch eine Fördereinrichtung 33, beispielsweise einem Schubförderer, aufgebracht. Die Fördereinrichtung 33 ist mit Kopplungsorganen 34 an den Fahrzeugkomponenten 31 befestigt. Die Fördereinrichtung 33 ihrerseits ist an den Seiten an zwei Seitenteilen 35 und 36 aufgelegt und befestigt. Die Seitenteile 35 und 36 werden unterhalb des Förderkorridors 32 durch ein Bodenteil 37 miteinander verbunden. Die beiden Seitenteile 35 und 36 und das Bodenteil 37 bilden gemeinsam ein Traggerüst 38, das eine U-förmige Rinnenform aufweist und den Förderkorridor 32 jeweils seitlich und von unten begrenzt. Das Traggerüst 38 ist selbsttragend ausgeführt und kann in vormontierter Form von einem Herstellungsort zum Verwendungsort transportiert werden. Das selbsttragend ausgeführte Traggerüst 38 wird zur Herstellung der Überflurfördereinrichtung 30 von oben auf mehrere hintereinander angeordnete Säulenportale 39 aufgelegt und befestigt. Jedes Säulenportal besteht aus zwei Stützsäulen 40 und 41 und einer zwischen den beiden Stützsäulen 40 und 41 angebrachten Querbrücke 42. An den unteren Enden der Seitenteile 35 und 36 und an der Oberseite der Querbrücke 42 sind jeweils Befestigungslaschen 43 und 44 vorgesehen, die eine Ausrichtung des Traggerüsts 38 auf den Säulenportalen 39 und eine anschließende Fixierung ermöglichen. Die Stützsäulen 40 und 41 sowie die Querbrücke 42 sind aus rechteckförmigen Rohren hergestellt und weisen an ihren aneinanderliegenden Enden jeweils einen Gehrungsschnitt auf, so dass die Endquerschnitte der beiden Stützsäulen flächenbündig auf den Endquerschnitten der Querbrücke zur Anlage kommen. Zur Verbindung der Stützsäulen 40 und 41 und der Querbrücke 42 sind die auf Gehrung geschnittenen Endquerschnitte mit Schweißnähten 45 miteinander verschweißt.

Um die Säulenportale auf geringem Transportraum transportieren zu können, können die beiden Stützsäulen in zwei Teile zerlegt werden. Dazu sind an den Stützsäulen 40 und 41 jeweils Verbindungsstellen 46 vorgesehen, in denen die Stützsäulen 40 und 41 in zwei Teile 40a und 40 b bzw. 41a und 41b zerlegt werden können.

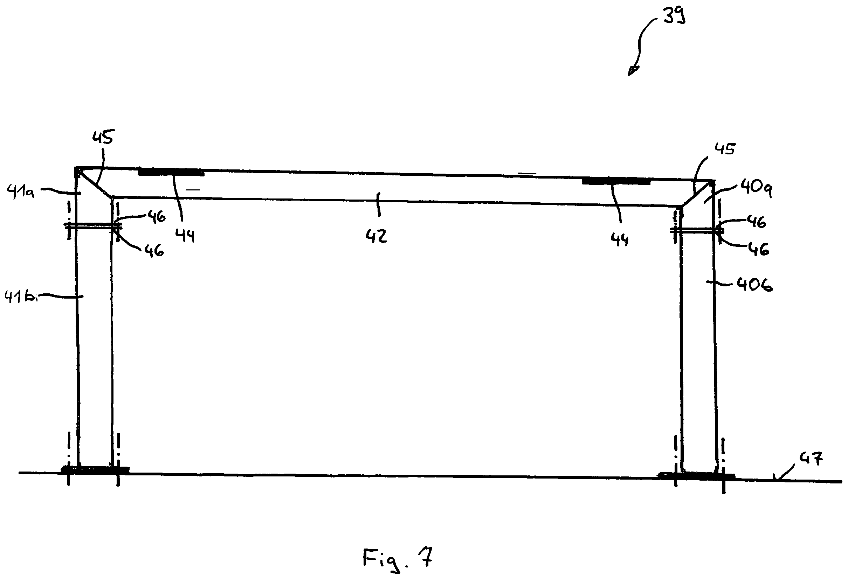

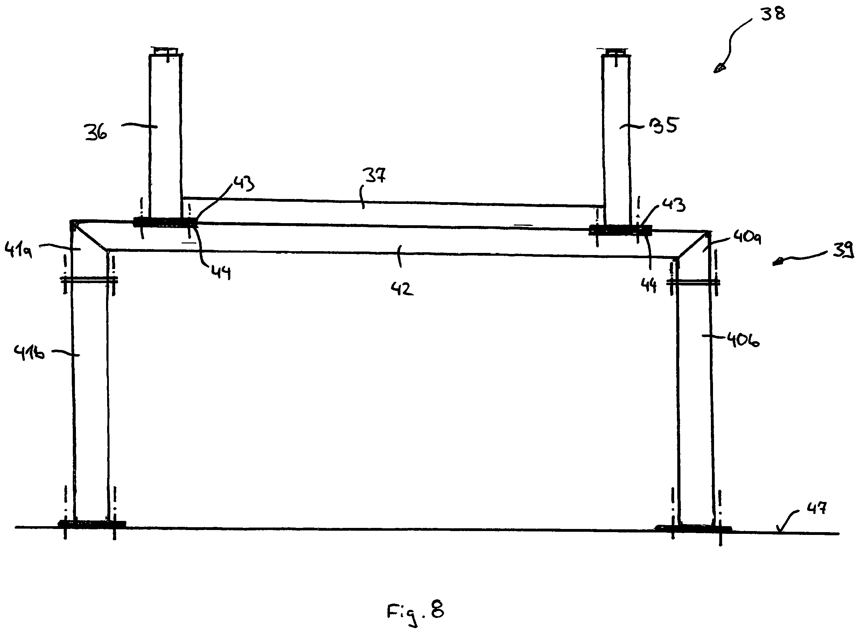

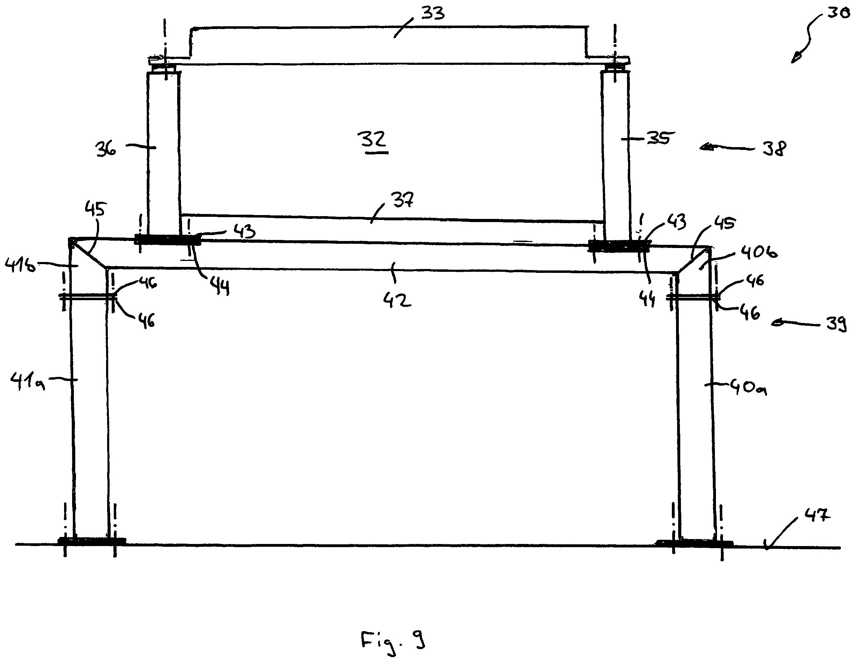

Anhand der Darstellungen in Fig. 7 bis Fig. 9 soll schematisiert der Montagevorgang zum Aufbau der Überflurfördereinrichtung 30 dargestellt werden. Zunächst werden, wie in Fig. 7 dargestellt ist, alle Säulenportale der Überflurfördereinrichtung 30 in der Montagehalle positioniert und fixiert. Anschließend wird das vorgefertigte und selbsttragend ausgeführte Traggerüst 38 auf die mindestens zwei hintereinander angeordneten Querbrücken 42 zweier Säulenportale aufgelegt. Selbstverständlich können auch mehr als zwei Säulenportale vorhanden sein, um das Traggerüst von unten abzustützen. Schließlich wird, wie in Fig. 9 dargestellt, die Fördereinrichtung 33 von oben auf das Traggerüst 38 aufgelegt und befestigt. Im Zwischenraum zwischen den Querbrücken 42 und dem Hallenboden 47 können Förderfahrzeuge und Montageeinrichtungen angeordnet werden.

## Patentansprüche

1. Überflurfördereinrichtung (01, 30) zur Integration in einer Montageanlage zum Transport von Fahrzeugkomponenten (31) mittels einer auf der Überflurfördereinrichtung (01, 30) angeordneten Fördereinrichtung (33), mit einem Traggerüst (03, 38), wobei das Traggerüst (03, 38) eine Länge von mehr als 5 m und eine Breite von mehr als 2 m aufweist, und wobei die Fördereinrichtung (33) am Traggerüst (03, 38) montierbar ist, und wobei das Traggerüst (03, 38) und die Fördereinrichtung (33) einen Förderkorridor (32) bilden, in dem die Fahrzeugkomponenten (31) von einer Eingabestelle zu einer Ausgabestelle transportiert werden können, und wobei das Traggerüst (03, 38) mit Lagerungsmitteln auf dem Boden (47) der Montageanlage gelagert ist, und wobei durch die Lagerungsmittel zwischen der Unterseite des Traggerüsts (03, 38) und der Oberseite des Bodens (47) ein zur Bauteilmontage und/oder zum Bauteiltransport geeigneter, begehbarer und/oder befahrbarer Freiraum mit einer freien Durchgangshöhe unterhalb des Traggerüstes von zumindest 2 m gebildet wird, wobei zumindest ein Lagerungsmittel in der Art eines Säulenportals (39, 48) ausgebildet ist, wobei das Säulenportal (39, 48) zumindest zwei Stützsäulen (21, 40, 41) umfasst, deren untere Enden auf dem Boden (47) der Montageanlage angebracht werden, und wobei zwischen jeweils zwei Stützsäulen (21, 40, 41) zumindest eine Querbrücke (08, 42) angebracht ist, und wobei das Traggerüst (03, 38) auf der Oberseite der Querbrücke (08, 42) angeordnet ist **dadurch gekennzeichnet, dass** das Traggerüst (03, 38) vormontiert transportiert werden kann, zumindest zwei Seitenteile (35, 36, 49, 50) umfasst, die sich parallel zur Längsachse des Traggerüsts erstrecken und den Querschnitt des Förderkorridors (32) rechts und links begrenzen, und in der Art eines räumlichen Fachwerks selbsttragend ausgeführt ist, welches längsgerichtete und quergerichtete und diagonale und aufrechte miteinander verbundene Tragbalkenelemente (04, 05, 06, 07) umfasst.

2. Überflurfördereinrichtung nach Anspruch 1,
**dadurch gekennzeichnet,**
**dass** zwischen den Säulenportalen (39, 48) und dem Traggerüst (03, 38) eine Trennebene verläuft, wobei die Trennebene von Befestigungsmitteln, mit denen das Traggerüst (03, 38) auf den Säulenportalen (39, 48) fixierbar ist, übergriffen wird.

3. Überflurfördereinrichtung nach Anspruch 2,
**dadurch gekennzeichnet,**
**dass** zumindest eine Querbrücke (42) der Säulenportale breiter als
das Traggerüst (38) ist, wobei das Traggerüst (38) durch Verschieben in der Trennebene relativ zur Querbrücke (42) positionierbar ist.

4. Überflurfördereinrichtung nach einem der Ansprüche 1 bis 3,
**dadurch gekennzeichnet,**
**dass** die Stützsäulen (21, 40, 41) und/oder die Querbrücke (08, 42) des Säulenportals (39, 48) aus Rohrmaterial mit einem geschlossenen Rohrquerschnitt hergestellt sind.

5. Überflurfördereinrichtung nach Anspruch 4,
**dadurch gekennzeichnet,**
**dass** die oberen Enden der Stützsäulen (40, 41) und/oder seitlichen Enden der Querbrücke (42) auf Gehrung geschnitten sind, wobei die Endquerschnitte der Stützsäulen (40, 41) flächenbündig auf den Endquerschnitten der Querbrücke (42) zur Anlage kommen.

6. Überflurfördereinrichtung nach Anspruch 4 oder 5,
**dadurch gekennzeichnet,**
**dass** die oberen Enden der Stützsäulen (40, 41) und die seitlichen Enden der Querbrücke (42) in einer Schweißnaht (45) miteinander verschweißt sind.

7. Überflurfördereinrichtung nach einem der Ansprüche 1 bis 6,
**dadurch gekennzeichnet,**
**dass** die Stützsäulen (40, 41) zweiteilig ausgebildet sind, wobei die beiden Teile (40a, 40b, 41a, 41b) der Stützsäule (40, 41) in einer Verbindungsstelle (46) miteinander verbunden werden können.

8. Überflurfördereinrichtung nach einem der Ansprüche 1 bis 7,
**dadurch gekennzeichnet,**
**dass** auf der Oberseite der Querbrücke (42) Befestigungslaschen (44) vorgesehen sind, wobei das Traggerüst (38) an den Befestigungsla-sehen (44) mit der Querbrücke (42) verbunden werden kann.

9. Überflurfördereinrichtung nach einem der Ansprüche 1 bis 8, **dadurch gekennzeichnet, dass** die Fördereinrichtung (33) zwischen den beiden Seitenteilen (35, 36, 49, 50) des Traggerüsts (03, 38) montierbar ist und den Querschnitt des Förderkorridors (32) von oben begrenzt.

10. Überflurfördereinrichtung nach einem der Ansprüche 1 bis 9, **dadurch gekennzeichnet,**
**dass** an zumindest einem Seitenteil (49, 50) entlang der Längsseite der Fördereinrichtung (33) ein Wartungsgang (12) angebracht ist.

11. Überflurfördereinrichtung nach nach einem der Ansprüche 1 bis 10 **dadurch gekennzeichnet,**
**dass** die Tragbalkenelemente (04, 05, 06, 07) einen geschlossenen Rohrquerschnitt aufweisen.

12. Überflurfördereinrichtung nach einem der Ansprüche 1 bis 11, **dadurch gekennzeichnet,**
**dass** das Traggerüst (03, 38) von einer Schweißkonstruktion gebildet wird.

13. Überflurfördereinrichtung nach einem der Ansprüche 1 bis 12, **dadurch gekennzeichnet,**
**dass** an der Überflurfördereinrichtung (01, 30) neben zumindest einem Säulenportal (39, 48) als weiteres Lagerungsmittel zumindest ein freistehender Stützpfeiler und/oder zumindest eine Wandkonsole und/oder zumindest ein freihängendes Zugelement zur Lagerung des Traggerüsts (03, 38) vorhanden ist.

## Claims

1. An overhead conveying device (01, 30) for integration into an assembly plant for transporting vehicle components (31) by means of a conveying device (33) that is arranged on the overhead conveying device (01, 30), comprising a supporting framework (03, 38), said supporting framework (03, 38) having a length of more than 5 m and a width of more than 2 m, and the conveying device (33) being mountable on the supporting framework (03, 38), and the supporting framework (03, 38) and the conveying device (33) forming a conveying corridor (32) in which the vehicle components (31) can be transported from an input point to an output point, and the supporting framework (03, 38) being mounted on the floor (47) of the assembly plant by bearing means, and the bearing means forming, between the underside of the supporting framework (03, 38) and the surface of the floor (47), a free space that is suitable for component assembly and/or for component transport and that is accessible on foot and/or on wheels and has a free movement height of at least 2 m below the supporting framework, at least one bearing means being designed in the manner of a column gantry (39, 48), said column gantry (39, 48) comprising at least two support columns (21, 40, 41) whose lower ends are attached to the floor (47) of the assembly plant, and at least one transverse bridge (08, 42) being mounted between two support columns (21, 40, 41) in each case, and the supporting framework (03, 38) being arranged on the upper side of the transverse bridge (08, 42),
**characterized in that**
the supporting framework (03, 38) can be transported in preassembled form, comprises at least two lateral parts (35, 36, 49, 50) which extend parallel to the longitudinal axis of the supporting framework and limit the cross-section of the conveying corridor (32) to the right and to the left, and is designed to be self-supporting in the manner of a spatial truss that comprises longitudinally and transversely oriented and diagonal and upright interconnected supporting beam elements (04, 05, 06, 07).

2. The overhead conveying device according to claim 1,
**characterized in that**
a separating plane extends between the column gantries (39, 48) and the supporting framework (03, 38), fixing means, by means of which the supporting framework (03, 38) can be fixed to the column gantries (39, 48), crossing the separating plane.

3. The overhead conveying device according to claim 2,
**characterized in that**
at least one transverse bridge (42) of the column gantries is wider than the supporting framework (38), the supporting framework (38) being positionable relative to the transverse bridge (42) by displacement in the separating plane.

4. The overhead conveying device according to any of the claims 1 to 3,
**characterized in that**
the support columns (21, 40, 41) and/or the transverse bridge (08, 42) of the column gantry (39, 48) are produced from tubular material having a closed tubular cross-section.

5. The overhead conveying device according to claim 4,
**characterized in that**
the upper ends of the support columns (40, 41) and/or the lateral ends of the transverse bridge (42) are mitre-cut, the surfaces of the end cross-sections of the support columns (40, 41) coming into flush contact with the surfaces of the end cross-sections of the transverse bridge (42).

6. The overhead conveying device according to claim 4 or 5,
**characterized in that**
the upper ends of the support columns (40, 41) and the lateral ends of the transverse bridge (42) are welded to each other in a welded seam (45).

7. The overhead conveying device according to any of the claims 1 to 6,
**characterized in that**
the support columns (40, 41) are designed in two parts, said two parts (40a, 40b, 41a, 41b) of the support column (40, 41) being connectable to each other in a connecting point (46).

8. The overhead conveying device according to any of the claims 1 to 7,
**characterized in that**
fastening straps (44) are provided on the upper side of the transverse bridge (42), the supporting framework (38) being connectable to the transverse bridge (42) at the fastening straps (44).

9. The overhead conveying device according to any of the claims 1 to 8,
**characterized in that**
the conveying device (33) is mountable between the two lateral parts (35, 36, 49, 50) of the supporting framework (03, 38) and limits the cross-section of the conveying corridor (32) from the top.

10. The overhead conveying device according to any of the claims 1 to 9,
**characterized in that**
a maintenance walkway (12) is arranged on at least one lateral part (49, 50) along the longitudinal side of the conveying device (33).

11. The overhead conveying device according to any of the claims 1 to 10,
**characterized in that**
the supporting beam elements (04, 05, 06, 07) have a closed tubular cross-section.

12. The overhead conveying device according to any of the claims 1 to 11,
**characterized in that**
the supporting framework (03, 38) is formed by a welded structure.

13. The overhead conveying device according to any of the claims 1 to 12,
**characterized in that**
in addition to at least one column gantry (39, 48), at least one freestanding support pillar and/or at least one wall bracket and/or at least one freely suspended traction element is provided on the overhead conveying device (01, 30) as another bearing means for bearing the supporting framework (03, 38).

## Revendications

1. Dispositif (01, 30) de convoyeur aérien pour être intégré dans une usine d'assemblage pour transporter des composants (31) de véhicule au moyen d'un dispositif (33) de convoyeur qui est disposé sur le dispositif (01, 30) de convoyeur aérien, comprenant un cadre (03, 38) de support, ledit cadre (03, 38) de support ayant une longueur de plus de 5 m et une largeur de plus de 2 m, et ledit dispositif (33) de convoyeur pouvant être monté sur le cadre (03, 38) de support, et ledit cadre (03, 38) de support et ledit dispositif (33) de convoyeur formant un couloir (32) de convoyeur dans lequel les composants (31) de véhicule peuvent être transportés d'un point d'entrée à un point de sortie, et ledit cadre (03, 38) de support étant monté sur le fond (47) de l'usine d'assemblage par des moyens d'appui, et lesdits moyens d'appui formant, entre le côté inférieur du cadre (03, 38) de support et le côté supérieur du fond (47), un espace libre qui est adapté pour l'assemblage des composants et/ou pour le transport des composants et qui est accessible à pied et/ou par véhicule et qui a une hauteur de passage libre au-dessous du cadre de support d'au moins 2 m, au moins un moyen d'appui étant réalisé en tant que portique (39, 48) de colonne, ledit portique (39, 48) de colonne comprenant au moins deux colonnes (21, 40, 41) de support dont les extrémités inférieures sont reliées au fond (47) de l'usine d'assemblage, et au moins un pont (08, 42) transversal étant monté entre deux colonnes (21, 40, 41) de support à chaque fois, et ledit cadre (03, 38) de support étant disposé sur le côté supérieur du pont (08, 42) transversal,
**caractérisé en ce que**
le cadre (03, 38) de support peut être transporté dans une forme préassemblée, comprend au moins deux parts (35, 36, 49, 50) latérales qui s'étendent parallèlement à l'axe longitudinal du cadre de support et limitent la coupe transversale du couloir (32) de convoyeur à droite et à gauche, et est réalisé autoportant à la manière d'un colombage spatial qui comprend des éléments (04, 05, 06, 07) de poutre de support interconnectés et orientés longitudinalement et transversalement et diagonalement et verticalement.

2. Dispositif de convoyeur aérien selon la revendication 1,
**caractérisé en ce qu'**
un plan de séparation s'étend entre les portiques (39, 48) de colonne et le cadre (03, 38) de support, ledit plan de séparation étant enjambé par des moyens de fixation, au moyen desquels le cadre (03, 38) de support peut être fixé sur les portiques (39, 48) de colonne.

3. Dispositif de convoyeur aérien selon la revendication 2,
**caractérisé en ce qu'**
au moins un pont (42) transversal des portiques de colonne est plus large que le cadre (38) de support, ledit cadre (38) de support pouvant être positionné par rapport au pont (42) transversal par un déplacement dans le plan de séparation.

4. Dispositif de convoyeur aérien selon l'une quelconque des revendications 1 à 3,
**caractérisé en ce que**
les colonnes (21, 40, 41) de support et/ou le pont (08, 42) transversal du portique (39, 48) de colonne sont fabriqués d'un matériau tubulaire ayant une coupe transversale tubulaire fermée.

5. Dispositif de convoyeur aérien selon la revendication 4,
**caractérisé en ce que**
les extrémités supérieures des colonnes (40, 41) de support et/ou les extrémités latérales du pont (42) transversal sont coupées à onglet, les coupes transversales des extrémités des colonnes (40, 41) de support venant en appui en affleurement avec les coupes transversales des extrémités du pont (42) transversal.

6. Dispositif de convoyeur aérien selon la revendication 4 ou 5,
**caractérisé en ce que**
les extrémités supérieures des colonnes (40, 41) de support et les extrémités latérales du pont (42) transversal sont soudées les unes aux autres dans une soudure (45).

7. Dispositif de convoyeur aérien selon l'une quelconque des revendications 1 à 6,
**caractérisé en ce que**
les colonnes (40, 41) de support sont réalisées en deux parts, lesdites deux parts (40a, 40b, 41a, 41b) de la colonne (40, 41) de support pouvant être reliées les unes aux autres dans un point (46) de liaison.

8. Dispositif de convoyeur aérien selon l'une quelconque des revendications 1 à 7,
**caractérisé en ce que**
des pattes (44) de fixation sont prévues sur le côté supérieur du pont (42) transversal, le cadre (38) de support pouvant être relié au pont (42) transversal par lesdites pattes (44) de fixation.

9. Dispositif de convoyeur aérien selon l'une quelconque des revendications 1 à 8,
**caractérisé en ce que**
le dispositif (33) de convoyeur peut être monté entre les deux parts (35, 36, 49, 50) latérales du cadre (03, 38) de support et limite la coupe transversale du couloir (32) de convoyeur par le haut.

10. Dispositif de convoyeur aérien selon l'une quelconque des revendications 1 à 9,
**caractérisé en ce que**
un couloir (12) de service est disposé sur au moins une part (49, 50) latérale le long du côté longitudinal du dispositif (33) de convoyeur.

11. Dispositif de convoyeur aérien selon l'une quelconque des revendications 1 à 10,
**caractérisé en ce que**
les éléments (04, 05, 06, 07) de poutre de support ont une coupe transversale tubulaire fermée.

12. Dispositif de convoyeur aérien selon l'une quelconque des revendications 1 à 11,
**caractérisé en ce que**
le cadre (03, 38) de support est formé par une construction de soudure.

13. Dispositif de convoyeur aérien selon l'une quelconque des revendications 1 à 12,
**caractérisé en ce qu'**
outre au moins un portique (39, 48) de colonne, au moins un pilier de support indépendant et/ou au moins une console murale et/ou au moins un élément de traction suspendu librement sont prévus sur le dispositif (01, 30) de convoyeur aérien en tant que moyen d'appui additionnel pour appuyer le cadre (03, 38) de support.
